# FASCICULE DE BREVET EUROPEEN

(11) **EP 1 237 381 B1**
(45) Date de publication et mention de la délivrance du brevet: **03.08.2011**
(21) Numéro de dépôt: 01403147.0
(22) Date de dépôt: 06.12.2001
(51) Int. Cl.: H04B 7/185

(54) **Dispositif de radiotéléphonie cellulaire utilisable à bord d'un véhicule**
Zellulares Funktelefongerät zur Verwendung an Bord eines Fahrzeugs
Cellular radiotelephony device usable on board of a vehicle

(30) Priorité: 01.03.2001 FR 0102805
(43) Date de publication de la demande: 04.09.2002
(73) Titulaire: Alcatel Lucent, 75007 Paris (FR)
(72) Inventeur: Criqui, Jean-François, 92600 Asnieres (FR); Argouarch, Francis, 29200 Brest (FR); Auvray, Gérard, 95870 Bezons (FR)
(74) Mandataire: Sciaux, Edmond

(56) Documents cités:
- EP-A- 0 998 062
- WO-A-00/57578

## Description

L'invention concerne un dispositif de radiotéléphonie cellulaire utilisable à bord d'un véhicule, par exemple un avion, un train, un paquebot,...., et utilisant une liaison par satellite.

Le document WO 94/28684 décrit un système de radiotéléphonie cellulaire utilisable à bord d'un avion. Il permet d'utiliser des terminaux portables GSM classiques, mais en les reliant à des stations de base GSM embarquées, au moyen de câbles ou de liaisons infrarouges, afin de supprimer tout risque que des rayonnements radio émis par ces terminaux puissent perturber des équipement de navigation. Les stations de base sont reliées à un contrôleur de stations de base, qui est lui-même embarqué et relié à un commutateur embarqué. Ce contrôleur embarqué est relié à un réseau terrestre de radiotéléphonie mobile par une liaison radio directe, ou via un satellite.

Le document WO 98/21838 décrit un système analogue, mais comportant un contrôleur de stations de base et un commutateur qui ne sont pas embarqués mais au sol. Une station de base embarquée est reliée au contrôleur de stations de base par une liaison via un satellite.

Le document EP 0.998.062 décrit un système de radiotéléphonie cellulaire utilisable à bord d'un avion. Il permet d'utiliser des terminaux portables GSM classiques, en les utilisant de manière classique, c'est à dire sans câble ni liaison infrarouge pour les relier à des stations de base GSM embarquées. Ces stations de base sont reliées à un contrôleur embarqué qui est relié à un réseau terrestre de radiotéléphonie mobile par une liaison via un satellite.

Ces systèmes connus appliquent les procédures GSM normalisées. Lorsqu'un terminal embarqué fait une opération de localisation, ou établit une communication, ou bien lorsque le réseau au sol établit une communication avec l'avion, il est nécessaire d'établir au préalable une liaison de signalisation. La procédure GSM pour établir une liaison de signalisation comprend divers échanges de signaux. Dans le cas où cette procédure est réalisée à travers un réseau téléphonique numérique terrestre, le délai d'établissement de cette liaison de signalisation est imperceptible par les usagers. Dans le cas où ces échanges de signaux passent par un système satellitaire, le délai est de plusieurs secondes (jusqu'à vingt secondes). Il est alors gênant pour les usagers (ils annulent des appels parce qu'ils croient que leurs appels se sont perdus), et pour le système de télécommunication lui-même (des délais de sécurité arrivent à expiration avant que la liaison soit établie, et font avorter des tentatives d'établissement de liaison).

Le but de l'invention est de proposer un système qui n'ait pas cet inconvénient des systèmes connus.

L'objet de l'invention est un dispositif de radiotéléphonie cellulaire utilisable à bord d'un véhicule, ce dispositif comportant :
- une première station émettrice-réceptrice située à bord du véhicule et reliée à une antenne située à l'extérieur de ce véhicule pour établir une liaison radio externe entre ce véhicule et un réseau radiotéléphonique terrestre, via au moins un satellite ;
- et des moyens, situés dans le véhicule, pour coupler des terminaux radiotéléphoniques portatifs situés à l'intérieur du véhicule, à la station émettrice-réceptrice ;
**caractérisé** en ce que les moyens pour coupler comportent des moyens pour établir une liaison de signalisation permanente entre le véhicule et le réseau radiotéléphonique terrestre dés qu'au moins un terminal est allumé.

Le dispositif ainsi caractérisé permet d'anticiper le besoin de liaison de signalisation puisqu'une liaison de signalisation permanente est établie dès qu'un premier terminal fait une demande de localisation suite à sa mise sous tension. Il n'y a donc jamais d'attente causée par l'établissement d'une liaison de signalisation sauf éventuellement pour la première demande d'établissement d'une communication, si elle suit immédiatement l'allumage d'un premier terminal.

S'il y a simultanément plusieurs demandes d'établissement de communication, les terminaux demandeurs utilisent successivement la même liaison de signalisation, sans que le délais d'attente soit perceptible, tant que le nombre de demandes simultané est faible. Si le nombre de demandes simultanées dépassent un nombre prédéterminé, une seconde liaison de signalisation est établie par anticipation.

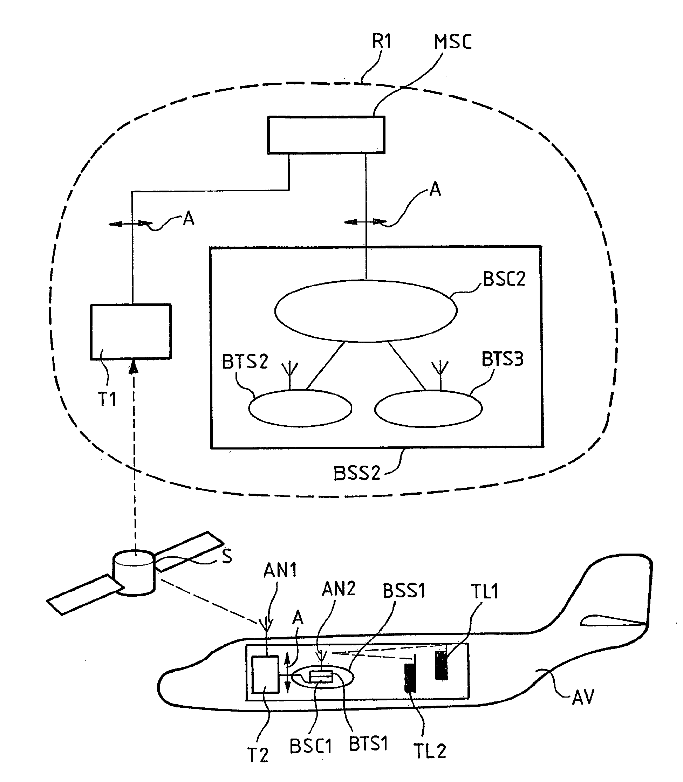

L'invention sera mieux comprise et d'autres caractéristiques apparaîtront à l'aide de la description ci-dessous et de la figure unique l'accompagnant. La figure représente un exemple de réalisation du dispositif selon l'invention, utilisé à bord d'un avion AV pour des terminaux de type GSM. Dans cet exemple de réalisation le dispositif comprend :
- un sous-système radio ("Base Station System" dans la terminologie anglaise du GSM), BSS1, analogue à un sous-système radio de type GSM utilisé couramment dans un réseau GSM terrestre ; ce sous-ensemble BSS1 étant placé à bord de l'avion AV ;
- une antenne AN2 placée à l'intérieur de la cabine de l'avion, et reliée à ce sous-système BSS1, pour lui permettre de communiquer avec des terminaux portatifs GSM, TL1, TL2, ... utilisés par des passagers ;
- une station émettrice-réceptrice T2 capable de communiquer avec un satellite, placée à bord de l'avion, et reliée à une entrée-sortie du sous-système BSS1 ;
- une antenne AN1 placée à l'extérieur de l'avion AV et reliée à la station émettrice-réceptrice T2.

L'antenne AN1 permet une liaison radio bidirectionnelle avec un réseau de radiotéléphonie cellulaire terrestre de type GSM , R1, via un satellite S et une station terrestre T1. Le réseau R1 comprend une pluralité de sous-systèmes radio, notamment un sous-système BSS2 qui est représenté sur la figure à titre d'exemple. Le sous-système BSS2 comprend par exemple un contrôleur de stations de bases ("Base Station Controller"), BSC2, qui est relié :
- d'une part à un centre de commutation du service radio-mobile ("Mobile-service Switching Center") MSC, en respectant l'interface dite A dans la terminologie du GSM ;
- et d'autre part à deux stations de base GSM ("Base transceiver station") BTS2 et BTS3.

Le sous-système radio BSS1 placé à bord est analogue à un sous-système radio GSM classique, tel que le sous-système radio BSS2. Il est simplifié parce qu'il nécessite moins de puissance d'émission et une capacité plus faible en nombre de terminaux mobiles desservis. Il comprend donc un contrôleur de station de base BSC1 et au moins une station de base BTS1, cette dernière étant reliée à l'antenne AN2. Le contrôleur BSC1 est relié à la station T2 en respectant l'interface A.

Le sous-système BSS1 comporte des circuits classiques pour permettre aux terminaux radiotéléphoniques portatifs TL1, TL2,... situés à l'intérieur de l'avion AV d'émettre et de recevoir des données. Le contrôleur de station de base BSC1 comporte des moyens logiciels pour envoyer à la station T2 une suite des commandes qui permettent d'établir une liaison de transmission de données, qui sera utilisée pour des signaux de signalisation conformes à la norme GSM. Ces commandes sont normalisées dans la norme GSM.

La station émettrice-réceptrice T2 classique et disponible dans le commerce. Elle exécute cette suite de commandes, ce qui a pour effet d'établir une liaison de transmission de données, apte à transmettre des signaux de signalisation GSM.

Le contrôleur BSC1 établit cette liaison de signalisation lorsque le sous-système radio BSS1 est mis sous tension, afin d'effectuer une procédure d'enregistrement de ce sous-système dans le réseau radiotéléphonique R1. Quand cette procédure est terminée cette liaison est relâchée. Puis il l'établit de nouveau lorsqu'un premier terminal est allumé dans l'avion, et demande à être enregistrer (procédure de localisation). Elle reste établie aussi longtemps qu'il y a au moins un terminal qui reste alimenté, même s'il n 'y a aucune communication établie pour transmettre des signaux vocaux, ou des données autres que de la signalisation. Ainsi des signaux de signalisation peuvent être envoyés à tout moment par des terminaux, sans aucun délais d'établissement de liaison de signalisation.

Le contrôleur BSC1 compte le nombre de terminaux qui ont été allumés. Lorsqu'un passager éteint son terminal, ce dernier émet un signal dit de détachement vers le réseau. Le contrôleur BSC1 détecte ce signal et soustrait une unité au nombre de terminaux allumés. Quand il n'y a plus aucun terminal allumé, le contrôleur BSC1 libère la liaison de signalisation.

La station T2, l'antenne AN2, et la station terrestre T1 peuvent être analogues à celles utilisées actuellement pour le service de téléphonie à bord des avions ou autres véhicules. Selon le trafic envisagé, le lien entre l'avion AV et le réseau R1 peut être un lien numérique du type synchrone (par multiple ou sous multiple d'un débit de 2 Mb/s) ou du type transmission en mode paquet. La station terrienne T1 est reliée au centre de commutation MSC en respectant l'interface A. Selon un mode de réalisation, cette interface A peut être mise en oeuvre sur une liaison utilisant le protocole Internet.

La portée de l'invention n'est pas limitée à la norme GSM, puisque tous les autres types de système radiotéléphonique utilisant un satellite ont le même problème de délais d'établissement d'une liaison de signalisation, et peuvent utiliser un dispositif analogue à celui décrit ci-dessus.

## Revendications

1. Dispositif de radiotéléphonie cellulaire utilisable à bord d'un véhicule (AV), ce dispositif comportant :
- une première station émettrice-réceptrice (T2) située à bord du véhicule et reliée à une antenne (AN1) située à l'extérieur de ce véhicule pour établir une liaison radio externe entre ce véhicule et un réseau radiotéléphonique terrestre (R1), via au moins un satellite (S) ;
- et des moyens (BSS1, AN2), situés dans le véhicule, pour coupler des terminaux radiotéléphoniques portatifs (TL1, TL2) situés à l'intérieur du véhicule, à la station émettrice-réceptrice (T2) ;
**caractérisé en ce que** les moyens pour coupler comportent des moyens (BSC1, T2) pour établir une liaison de signalisation permanente entre le véhicule et le réseau radiotéléphonique terrestre (R1) dés qu'au moins un terminal (TL1, TL2) est allumé.

2. Dispositif selon la revendication 1, **caractérisé en ce que** les moyens pour coupler comportent des moyens (BSC1, T2) pour relâcher ladite liaison de signalisation entre le véhicule et le réseau radiotéléphonique terrestre (R1) si plus aucun terminal (TL1, TL2) n'est allumé.

## Claims

1. A cellular radio telephony device that may be used on-board a vehicle (AV), which device comprises:
- a first sending-receiving station (T2) located on-board the vehicle and connected to an antenna (AN1) located outside that vehicle in order to establish an external radio link between that vehicle and a terrestrial radio telephony network (R1), via at least one satellite (S);
- and means (BSS1, AN2), located within the vehicle, for coupling portable radio telephony terminals (TL1, TL2) located inside the vehicle, to the sending-receiving station (T2);
**characterized in that** the means for coupling comprise means (BSC1, T2) for establishing a permanent signal link between the vehicle and the terrestrial radio telephony network (R1) when at least one terminal (TL1, TL2) is turned on.

2. A device according to claim 1, **characterized in that** the means for coupling comprise means (BSC1, T2) for releasing said signal link between the vehicle and the terrestrial radio telephony network (R1) if no terminal (TL1, TL2) is on anymore.

## Patentansprüche

1. Zellulare Funktelefonvorrichtung für den Einsatz an Bord eines Fahrzeugs (AV), wobei diese Vorrichtung umfasst:
- Eine erste Sender-/Empfängerstation (T2), welche an Bord des Fahrzeugs installiert und mit einer am Fahrzeugäußeren angebrachten Antenne (AN1) verbunden ist, um eine externe Funkverbindung zwischen diesem Fahrzeug und einem terrestrischen Funktelefonnetzwerk (R1) über mindestens einen Satelliten (S) aufzubauen;
- und Mittel (BSS1, AN2), welche an Bord des Fahrzeugs installiert sind, um an Bord des Fahrzeugs installierte mobile Funktelefonendgeräte (TL1, TL2) an die Sender-/Empfängerstation (T2) zu koppeln;
**dadurch gekennzeichnet, dass** die Mittel zum Koppeln Mittel (BSC1, T2) umfassen, um eine permanente Signalisierungsverbindung zwischen dem Fahrzeug und dem terrestrischen Funktelefonnetzwerk (R1) aufzubauen, sobald mindestens ein Endgerät (TL1, TL2) eingeschaltet wird.

2. Vorrichtung nach Anspruch 1, **dadurch gekennzeichnet, dass** die Mittel zum Koppeln Mittel (BSC1, T2) umfassen, um die besagte Signalisierungsverbindung zwischen dem Fahrzeug und dem terrestrischen Funktelefonnetzwerk (R1) freizugeben, wenn kein Endgerät (TL1, TL2) mehr eingeschaltet ist.
